## Europäisches Patentamt
## European Patent Office
## Office européen des brevets

(19)

(11) Veröffentlichungsnummer: **0 171 539**
**A2**

(12) # EUROPÄISCHE PATENTANMELDUNG

(21) Anmeldenummer: **85107348.6**

(22) Anmeldetag: **13.06.85**

(51) Int. Cl.⁴: **G 01 G 21/23**
**G 01 G 21/24, G 01 G 19/44**

(30) Priorität: **17.08.84 CH 3953/84**

(43) Veröffentlichungstag der Anmeldung:
**19.02.86 Patentblatt 86/8**

(84) Benannte Vertragsstaaten:
**DE FR GB**

(71) Anmelder: **Mettler Instrumente AG**

**CH-8606 Greifensee(CH)**

(72) Erfinder: **Kunz, Peter**
**Saumstrasse 28**
**CH-8625 Gossau(CH)**

(54) **Plattformwaage.**

(57) Bei einer Plattformwaage mit einem starren Tragrahmen, mit einem Hebelwerk zur Kraftübersetzung, mit einer sich auf das Hebelwerk stützenden Wägeplattform und mit einem innerhalb des Tragrahmens angeordneten Messwandler zur Erzeugung gewichtsproportionaler elektrischer Signale wird vorgeschlagen, zweiarmige Hebel (20) zu verwenden, die an einem den starren Tragrahmen (10) umgreifenden beweglichen, die Last aufnehmenden Rahmen (28) angelenkt sind.

Dieses Konzept ermöglicht den Bau sehr flacher, kaum eckenlastempfindlicher Waagen hoher Resultatauflösung.

Anwendung bevorzugt für Präzisionswaagen mit einem Wägebereich zwischen etwa 10 und etwa 100 kg.

Fig. 2

Mettler Instrumente AG, Greifensee

Plattformwaage

Die Erfindung betrifft eine Plattformwaage, mit einem starren Tragrahmen, mit einem Hebelwerk zur Kraftübersetzung, mit einer sich auf das Hebelwerk stützenden Wägeplattform, und mit einem innerhalb des Tragrahmens angeordneten Messwandler zur Erzeugung gewichtsproportionaler elektrischer Signale.

Derartige Waagen sind in verschiedenen Ausführungen bekannt. Sie sind regelmässig für Wägebereiche bestimmt, die sich zwischen etwa 10 und einigen 100 kg bewegen. Bisher bekannte Waagen dieser Art verfügen über einen starren Tragrahmen, innerhalb dessen das Hebelwerk und der (oder die) Messwandler untergebracht sind. Als Messwandler werden meist Dehnungsmessstreifen-Zellen (DMS-Zellen) verwendet, aber auch Wandler nach anderen Prinzipien (z.B. Zellen mit schwingenden Saiten oder solche mit elektromagnetischer Kraftkompensation). Die Anzeige ist dabei meist separat angeordnet, um die Beschickung der Wägeplattform nicht zu behindern.

Beispiele für bisher bekannte einschlägige Waagen zeigen die US-Patentschriften 3,938,603 oder 4,315,554 sowie die deutsche Offenlegungsschrift 21 56 410.

Der Erfindung lag die Aufgabe zugrunde, eine Waage der eingangs genannten Art mit verringerter Empfindlichkeit gegenüber unzentrischer Belastung (Eckenlastempfindlichkeit) zu schaffen, wobei gleichzeitig eine möglichst geringe Bauhöhe sowie eine hohe Auflösung des Wägeresultates angestrebt wurden.

Gemäss der Erfindung wird diese Aufgabe dadurch gelöst, dass das Hebelwerk zweiarmige Hebel umfasst, die an einem den starren Tragrahmen umgreifenden beweglichen, die Last aufnehmenden Rahmen angelenkt sind. Dieses Konzept erlaubt bei gegebenen Aussendimensionen der Wägeplattform neben einer trotz geringer Bauhöhe sehr verwindungssteifen (und damit weniger eckenlastempfindlichen) Konstruktion des Tragrahmens die maximal mögliche Hebellänge (und damit eine grosse Kraftübersetzung).

Eine bevorzugte Ausbildung dieses Konzeptes besteht darin, dass das Hebelwerk die Form eines T bildet und aus drei Hebeln besteht, welche an ein gemeinsames Koppelglied am Eingang des Messwandlers angelenkt sind. Dabei ruht zweckmässigerweise der starre Tragrahmen auf drei Füssen, welche jeweils am Ort einer Hebelanlenkung angeordnet sind. Dies ergibt eine optimale Standsicherheit.

Zur Einstellung der Eckenlastempfindlichkeit ist eine Ausgestaltung zweckmässig, bei der die dem Koppelglied zugewandten Hebelenden über eine Einrichtung zum Variieren der wirksamen Hebellänge verfügen. Eine genaue Justierung wird dabei beispielsweise dann ermöglicht, wenn die genannte Einrichtung ein U-förmig geschlitztes Bauteil umfasst, dessen freie Enden gegen die Spreizkraft einer Feder mittels einer Einstellschraube zusammendrückbar sind.

In weiterer Ausbildung der Erfindung kann der bewegliche Rahmen oben von einer angeschraubten Platte abgeschlossen sein, welche über eine Ausnehmung verfügt, in der ein ebenfalls plattenförmiger Lenker zur Führung des beweglichen Rahmens angeordnet ist, wobei der Lenker einerseits am starren Tragrahmen, andererseits an der Platte angelenkt ist.

Zur weiteren Erhöhung der Eckenlastsicherheit kann zwischen dem beweglichen Rahmen und der Wägeplattform eine Ausgleichsschale angeordnet sein, die sich über eine Mehrpunktlagerung auf dem beweglichen Rahmen abstützt. Diese Ausgleichsschale kann bei exzentrischer Belastung durch eine gewisse Eigendeformation den Tragrahmen vor Verwindung schützen und so die Eckenlastempfindlichkeit der Waage weiter verringern. Dabei befinden sich zuweckmässigerweise die Lagerpunkte der Ausgleichsschale nahe den Hebelanlenkstellen.

In bevorzugter Ausgestaltung der Erfindung ist der Messwandler eine elektromagnetisch kompensierende Kraftmesszelle. Die Kombination einer solchen Zelle mit dem erfindungsgemässen Konzept ermöglicht Wägungen hoher relativer Genauigkeit und erlaubt daher auch eine grosse Auflösung des Wägeresultates.

Ein Ausführungsbeispiel der Erfindung wird nachstehend anhand der nicht massstäblichen Zeichnungen erläutert.

In den Zeichnungen ist
    Figur 1 eine Draufsicht (ohne Waagschale),
    Figur 2 ein Schnitt entlang der Linie 2 - 2 in Figur 1
            (in vergrösserter Darstellung), und
    Figur 3, 4, 5 und 6 je ein Detail (in nochmals vergrösserter Darstellung).

Die Waage gemäss dem Ausführungsbeispiel verfügt über einen starren, rechtwinkligen Tragrahmen 10 mit einer Grundplatte 12. Je zwei symmetrisch angeordnete Rippen 14 bzw. 16 dienen zur Versteifung. Die vorgenannten Elemente bilden zweckmässigerweise gemeinsam ein metallenes Gussstück. Es ruht auf drei Füssen 18, die an dem Tragrahmen 10 nahe den Hebelanlenkpunkten (siehe unten) montiert sind.

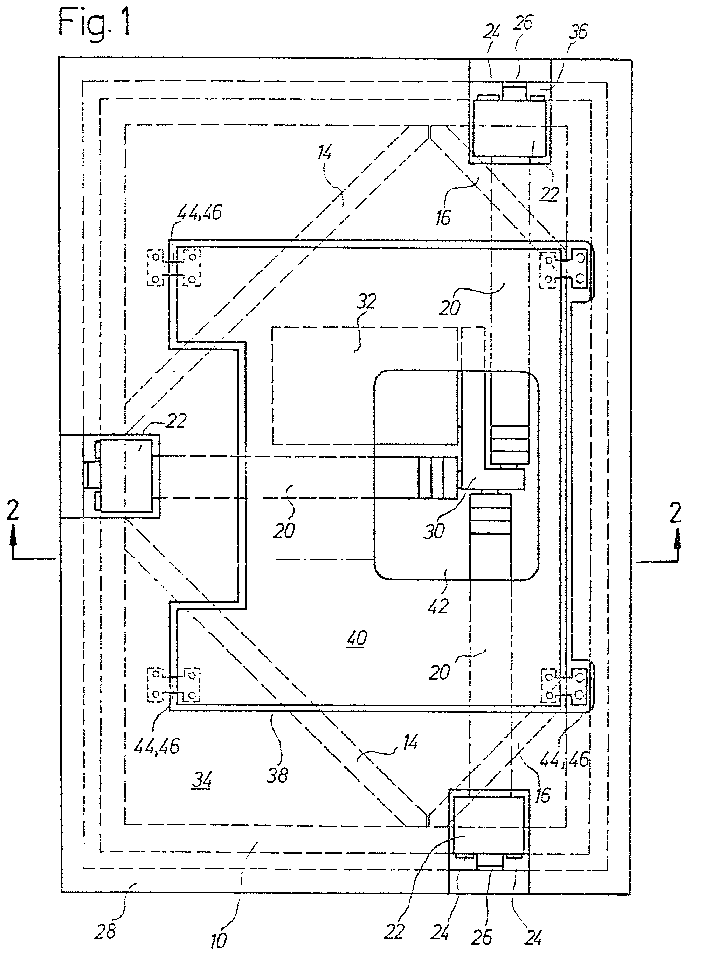

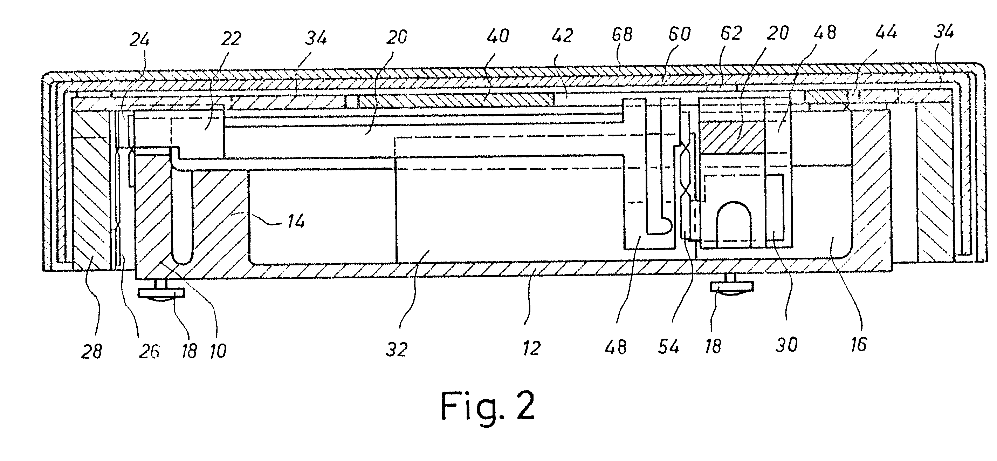

Das Hebelwerk umfasst drei gleiche zweiarmige Hebel 20, die T-förmig verteilt sind. Auf der Lastseite weisen die Hebel 20 ein Endstück 22 auf. Dieses ist über je zwei Biegelager (Stehlager) 24 mit dem Tragrahmen 10 verbunden. Ein weiteres, als Zuglager wirkendes Biegelager 26 verbindet das Endstück 22 mit einem zweiten Rahmen 28. Sämtliche Biegelager sind verschraubt (Schrauben sind in den Figuren 1 und 2 der Deutlichkeit wegen nicht gezeichnet). An ihren inneren Enden sind die Hebel 20 über ein gemeinsames Koppelglied 30 mit einer Kraftmesszelle (Messwandler) 32 verbunden. Für den Messwandler könnte grundsätzlich jedes wegarm arbeitende Prinzip verwendet werden, also beispielsweise Zellen mit schwingenden Saiten oder mit Dehnungsmessstreifen. Aus dem oben bereits genannten Grunde der hohen Wägegenauigkeit wird hier ein elektromagnetisch kraftkompensierender Wandler bevorzugt, dessen Aufbau und Wirkungsweise bekannt ist und daher im Rahmen der vorliegenden Erfindung keiner Erläuterung bedarf. Auch kann auf die Darstellung der als solche ebenfalls konventionellen (digitalen) Gewichtsanzeige verzichtet werden.

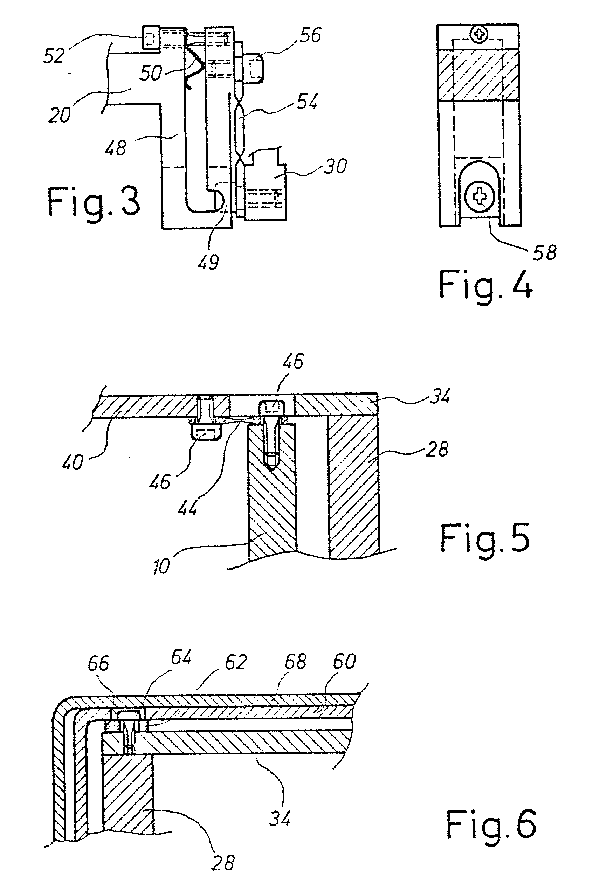

Der zweite Rahmen 28 ist ebenfalls rechtwinklig. Er umfasst den starren Tragrahmen 10 und ist in Lastrichtung (d.h. vertikal) beweglich angeordnet. Eine obere Abschlussplatte 34 ist mit dem Rahmen 28 verschraubt (Schrauben nicht gezeichnet). Sie verfügt über drei Aussparungen 36 an den Stellen, wo die lastseitigen Hebelenden (22) angelenkt sind, um Bauhöhe zu sparen. Ferner ist eine grosse mittlere Oeffnung vorhanden, welche einen plattenförmigen Lenker 40 mit Spiel umschliesst. Dieser wiederum verfügt über eine rechteckige Oeffnung 42, welche den Zugang zu den Hebelenden am Koppelglied 30 ermöglicht. Der Lenker 40 ist mittels zweier Biegelager 44 am starren Tragrahmen 10 schwenkbar befestigt (Schrauben 46, vgl. Figur 5). Auf der gegenüberliegenden Seite bilden zwei weitere angeschraubte Biegelager 44 die Verbindung zur oberen Abschlussplatte 34.

Die drei Hebel 20 verfügen über je ein vertikal geschlitztes, U-ähnliches inneres Endstück 48 mit einer Biegestelle 49. Die Endstücke können dabei einstückig mit dem jeweiligen Hebel 20 geformt oder aber ein separates, angeschraubtes Bauteil sein. Die beiden Schenkel des U werden von einer vorgeformten Blattfeder 50 (vgl. Figur 3) in Richtung einer Vergrösserung der wirksamen Hebellänge gespreizt. Gegen die Federkraft können die Schenkel zur Feineinstellung der Hebellänge und damit zur Justierung der Eckenlastempfindlichkeit mittels einer Einstellschraube 52 zusammengezogen werden. Am beweglichen Schenkel des U ist ein Biegelager 54 angebracht (Schraube 56), das an seinem unteren Ende mit dem Koppelglied 30 verbunden ist (Schraube 58).

Mit der oberen Abschlussplatte 34 ist eine Zwischen-oder Ausgleichsschale 60 wie folgt verbunden (Figur 6): Nahe den Anlenkstellen der drei Hebel 20 am Rahmen 28 ist je ein mit der Schale 60 verbundenes (punktgeschweisstes) Auge 62 mit Bohrung vorhanden. Schrauben 64 dienen zur Befestigung der Schale 60 auf der Platte 34 so, dass zwischen beiden einige Millimeter Zwischenraum bleiben. Dabei wird der Schraubenkopf (64) in einer Oeffnung 66 der Schale 60 aufgenommen. Die eigentliche Waagschale oder Wägeplattform 68 liegt satt auf der Ausgleichsschale 60 und umschliesst diese seitlich mit nur wenig Spiel.

Beim Wägen wird die auf die Wägeplattform 68 aufgebrachte Last über die Ausgleichsschale 60 auf den beweglichen Rahmen 28 übertragen. Die Hebel 20 werden verschwenkt, und die inneren Hebelenden 48 ziehen am Koppelglied 30 nach oben. Dieser Bewegung wirkt die im Messwandler 32 erzeugte Kompensationskraft entgegen. Praktisch führen die Hebel 20 nur einen minimalen Schwenkweg aus, wegen des nahezu weglosen Arbeitsprinzips der elektromagnetischen Kraftkompensation.

Wird die Last exzentrisch aufgelegt, so deformiert sich die Ausgleichsschale 60 elastisch, bis sie an der Belastungsstelle (lose) auf der Platte 34 des beweglichen Rahmens 28 aufliegt. Damit wird praktisch vollständig verhindert, dass bei exzentrischer Last eine Deformation des Rahmens 28 stattfindet, welche die korrekte Funktion des Hebelwerks beeinträchtigen könnte (Eckenlastfehler!)

Eine Waage gemäss dem Ausführungsbeispiel besass einen Wägebereich von ca. 40 kg mit einer Anzeigeauflösung von 1 g. Bei einer Hebelübersetzung von 1:600 musste also von der Kompensationseinrichtung des Messwandlers lediglich eine Kraft von ca. 70 g aufgebracht werden. Die Eckenlastempfindlichkeit betrug weniger als 0,1 g je kg (etwa 2 g Eckenlastfehler, bezogen auf Vollast).

Patentansprüche

1. Plattformwaage, mit einem starren Tragrahmen, mit einem Hebelwerk zur Kraftübersetzung, mit einer sich auf das Hebelwerk stützenden Wägeplattform, und mit einem innerhalb des Tragrahmens angeordneten Messwandler zur Erzeugung gewichtsproportionaler elektrischer Signale, dadurch gekennzeichnet, dass das Hebelwerk zweiarmige Hebel (20) umfasst, die an einem den starren Tragrahmen (10) umgreifenden beweglichen, die Last aufnehmenden Rahmen (28) angelenkt sind.

2. Waage nach Anspruch 1, dadurch gekennzeichnet, dass das Hebelwerk die Form eines T bildet und aus drei Hebeln (20) besteht, welche an ein gemeinsames Koppelglied (30) am Eingang des Messwandlers (32) angelenkt sind.

3. Waage nach Anspruch 2, dadurch gekennzeichnet, dass der starre Tragrahmen (10) auf drei Füssen (18) ruht, welche jeweils am Ort einer Hebelanlenkung angeordnet sind.

4. Waage nach Anspruch 2 oder 3, dadurch gekennzeichnet, dass die dem Koppelglied (30) zugewandten Hebelenden über eine Einrichtung (48, 50, 52) zum Variieren der wirksamen Hebellänge verfügen.

5. Waage nach Anspruch 4, dadurch gekennzeichnet, dass die genannte Einrichtung ein U-förmig geschlitztes Bauteil (48) umfasst, dessen freie Enden gegen die Spreizkraft einer Feder (50) mittels einer Einstellschraube (52) zusammendrückbar sind.

6. Waage nach einem der Ansprüche 1 bis 5, dadurch gekennzeichnet, dass der bewegliche Rahmen (28) oben von einer angeschraubten Platte (34) abgeschlossen wird, welche über eine Ausnehmung (38) verfügt, in der ein ebenfalls plattenförmiger Lenker (40) zur Führung des beweglichen Rahmens (28) angeordnet ist, wobei der Lenker (40) einerseits am starren Tragrahmen (10), andererseits an der Platte (34) angelenkt ist.

7. Waage nach einem der Ansprüche 1 bis 6, dadurch gekennzeichnet, dass zwischen dem beweglichen Rahmen (28) und der Wägeplattform (68) eine Ausgleichsschale (60) angeordnet ist, die sich über eine Mehrpunktlagerung auf dem beweglichen Rahmen (28) abstützt.

8. Waage nach Anspruch 7, dadurch gekennzeichnet, dass sich die Lagerpunkte nahe den Hebelanlenkstellen befinden.

9. Waage nach einem der Ansprüche 1 bis 8, dadurch gekennzeichnet, dass der Messwandler (32) eine elektromagnetisch kompensierende Kraftmesszelle ist.

Fig. 1

Fig. 2

2/3

0171539

Fig. 3

Fig. 4

Fig. 5

Fig. 6